# EUROPÄISCHE PATENTSCHRIFT

(11) **EP 3 692 797 B1**
(45) Veröffentlichungstag und Bekanntmachung des Hinweises auf die Patenterteilung: **18.09.2024**
(21) Anmeldenummer: 19156371.7
(22) Anmeldetag: 11.02.2019
(51) Int. Cl.: A22C 21/00

(54) **VORRICHTUNG UND VERFAHREN ZUR AUTOMATISCHEN BRUSTFILETGEWINNUNG VON GEFLÜGELKÖRPERN ODER TEILEN DAVON**
DEVICE AND METHOD FOR AUTOMATICALLY OBTAINING BREAST FILLETS OF POULTRY CARCASSES OR PARTS THEREOF
APPAREIL ET PROCÉDÉ D'EXTRACTION AUTOMATIQUE DE FILET DE POITRINE DES CORPS DE VOLAILLE OU DE LEURS PARTIES

(43) Veröffentlichungstag der Anmeldung: 12.08.2020
(73) Patentinhaber: Nordischer Maschinenbau Rud. Baader GmbH + Co. KG, 23560 Lübeck (DE)
(72) Erfinder: SCHULZE, Adrian, 23564 Lübeck (DE)
(74) Vertreter: Stork Bamberger Patentanwälte PartmbB

(56) Entgegenhaltungen:
- EP-A1- 2 384 643
- EP-A1- 2 599 387
- EP-A1- 3 162 216
- DE-B3- 102006 040 454
- US-A1- 2018 184 673

## Beschreibung

Die vorliegende Erfindung betrifft eine Vorrichtung zur automatischen Brustfiletgewinnung von Geflügelkörpern oder Teilen davon. Des Weiteren betrifft die Erfindung ein Verfahren zur automatischen Brustfiletgewinnung von Geflügelkörpern oder Teilen davon.

Derartige Vorrichtungen und Verfahren zur Filetgewinnung kommen bei der voll- oder halbautomatischen Verarbeitung von Geflügelkörpern bzw. Geflügelkörperteilen zum Einsatz. Ein Verfahren zur maschinellen Gewinnung des Fleisches von Geflügelkörpern sowie eine Einrichtung zur Durchführung eines solchen Verfahrens geht beispielsweise aus dem Dokument DE 42 34 040 A1 aus dem Hause der Anmelderin hervor.

Eine weitere Vorrichtung sowie ein Verfahren zum Filetieren von Geflügel oder Geflügelteilen geht aus dem Dokument EP 2 384 643 hervor. Die bekannte Vorrichtung umfasst ein Fördersystem mit Trägern für das Geflügel bzw. die Geflügelteile mit zumindest einer Verarbeitungsstation, die entlang des Weges des Fördersystems für die Verarbeitung des Geflügels oder der Geflügelteile vorgesehen ist. Die Verarbeitungsstation ist ein Schneidmittel, das hinter einem Filet-Schaber positioniert ist, und welches mit einem Messer ausgestattet ist, das eine Schneidkante oder Schneidkanten zum Losschneiden von Gewebeverbindungen, die zwischen der Geflügelkarkasse und dem Geflügel bzw. dem Geflügelteil verblieben sind, bildet.

Bei den zu bearbeitenden Geflügelkörpern bzw. Geflügelkörperteilen handelt es sich um Brustkappen. Derartige Brustkappen entstehen beispielsweise mittels Schrägschnitt durch den Geflügelkörper. Eine solche Brustkappe umfasst daher im Wesentlichen Teile des Brustkorbs mit den Rippen, das Brustbein und das Gabelbein mit den Flügelgelenken an den freien Enden. An diesen setzen einerseits das Gabelbein und andererseits die Schulterblätter an. Die Geflügelkörper bzw. die Brustkappen werden mittels Aufnahmen gehalten und in Richtung ihrer Längsachse mit vorausweisenden Flügelgelenken gefördert. Entlang des Transportweges sind verschiedene Werkzeuge angeordnet, mittels derer die Bearbeitung der Geflügelkörper sequentiell erfolgt.

Bei den bekannten Vorrichtungen und Verfahren zur automatischen Brustfiletgewinnung kann es vorkommen, dass das Brustfilet nicht vollständig von dem Geflügelkörper gelöst wird. In der Regel ist es daher erforderlich, jeden Geflügelkörper in Augenschein zu nehmen und durch manuelles Eingreifen fehlerhaft filetierte Geflügelkörper aus dem Gesamtprozess zu entnehmen, um diese manuell nachzubearbeiten. Jedoch ist hierfür ein kostenintensiver Einsatz von Personal an der Maschine erforderlich.

Es ist daher Aufgabe der vorliegenden Erfindung, eine Vorrichtung zur automatischen Brustfiletgewinnung von Geflügelkörpern vorzuschlagen, die eine Beurteilung des Filetierungserfolgs mit hoher Zuverlässigkeit gewährleistet. Weiter ist es Aufgabe eine Vorrichtung vorzugschlagen, die eine automatische Differenzierung zwischen filetierten und nicht oder nicht vollständig filetierten Geflügelkörpern erlaubt. Des Weiteren besteht die Aufgabe darin, ein entsprechendes Verfahren vorzuschlagen.

Die Aufgabe wird durch die eingangs genannte Vorrichtung mit den Merkmalen des Anspruchs 1 gelöst. Mittels der Messeinrichtung wird vollautomatisch erkannt, ob das Brustfilet vollständig von dem Geflügelkörper gelöst worden ist oder ob die Entfernung des Brustfilets nur zum Teil oder unvollständig erfolgt ist. Vorteilhafterweise wird so vollautomatisch überwacht, ob der Filetiervorgang erfolgreich war. Der Einsatz kostenintensiven Personals zur Inaugenscheinnahme jedes bearbeiteten Geflügelkörpers kann auf diese Weise entfallen. Ein weiterer Vorteil besteht darin, dass die Messeinrichtung mit dem Tastelement zum Betasten des Geflügelkörpers eine hohe Robustheit aufweist und daher extrem ausfallsicher ist. Zudem bietet die Einfachheit der mechanischen Konstruktion hygienische Vorteile, da diese leicht zu reinigen ist und den im Bereich der Lebensmittelverarbeitung hohen Hygienestandards genügt.

Durch das Erfassen einer Winkelstellung beim Auslenken des Tastelements kann das Sensorelement einfacher Bauart sein, da dieses grundsätzlich nur eine Winkelstellung zwingend detektieren muss. So kann das Sensorelement beispielsweise als kostengünstiger elektrischer Tastkontakt ausgelegt sein. Alternativ ist es möglich, dass das Sensorelement eingerichtet ist, mehrere Winkelstellungen beim Auslenken des Tastelements zu detektieren. Auch ist es möglich, dass das Sensorelement die Winkelstellung des Tastelements kontinuierlich erfasst und zur weiteren Auswertung ein entsprechendes, die Winkelstellung repräsentierendes, Signal bereitstellt.

Vorteilhafterweise ist die Steuereinrichtung also eingerichtet, automatisch zwischen filetierten und nicht oder unvollständig filetierten Geflügelkörpern auf Basis der ermittelten Winkelstellung zu differenzieren.

Eine zweckmäßige Ausgestaltung der Erfindung ist dadurch gekennzeichnet, dass das Tastelement unter Federvorspannung um eine Schwenkachse schwenkbar gelagert angeordnet ist. Dies bietet den Vorteil, dass das Tastelement selbsttätig in Richtung des Geflügelkörpers schwenkt und über die Federvorspannung mit einem definierten Andruck die Brustseite des Geflügelkörpers abtastet. So wird sichergestellt, dass das Tastelement zuverlässig in mechanischem Kontakt mit der Brustseite des Geflügelkörpers steht und diese entsprechend der jeweiligen Geometrie des Geflügelkörpers abtastet.

Eine bevorzugte Weiterbildung der Erfindung zeichnet sich dadurch aus, dass ein freies Schwenkarmende des Tastelements ausgehend von der Schwenkachse in die Förderrichtung zeigend ausgerichtet ist. Die vorgenannte Ausrichtung bietet den Vorteil, dass das Tastelement beim Vorbeifördern des Geflügelkörpers zwar mit diesem in Kontakt kommt, der Geflügelkörper jedoch an dem Tastelement weitestgehend ungehindert und ohne die Gefahr eines Verklemmens vorbeigefördert wird. Das Abtasten des Geflügelkörpers erfolgt also besonders schonend.

Gemäß einer weiteren bevorzugten Ausbildung der Erfindung ist das Tastelement in einer Warteposition, in der es sich nicht im mechanischen Kontakt mit einem der Geflügelkörper befindet, ausgehend von der Schwenkachse zur Bearbeitungsstrecke weisend gegenüber der Bearbeitungsstrecke in Schrägstellung angeordnet. Anders ausgedrückt ist das Tastelement derart angeordnet, dass dieses einerseits in der Warteposition gegenüber der Bearbeitungsstrecke schräggestellt ist und andererseits sich im Transportweg der Geflügelkörper befindet, so dass diese zwangsläufig brustseitig mit dem Tastelement beim Vorbeifördern an der Messeinrichtung in mechanischen Kontakt kommen. Auf diese Weise wird ein zuverlässiges mechanisches Abtasten jedes der Geflügelkörper sichergestellt.

Gemäß einer weiteren bevorzugten Ausführungsform ist das Sensorelement als induktiver Sensor ausgebildet. Diese bietet den Vorteil, dass die mindestens eine Winkelstellung des Tastelements berührungslos detektierbar eingerichtet ist. Das Tastelement umfasst hierzu vorzugsweise eine metallische Seitenfläche. Die Position des induktiven Sensors wird dabei so gewählt, dass bei einer vorgegebenen Winkelstellung, die eine Unterscheidung zulässt, ob sich das Brustfilet noch am Geflügelkörper befindet oder ob es bereits vom Geflügelkörper abgelöst worden ist, die Seitenfläche des Tastelements in den Erfassungsbereich des induktiven Sensors gelangt. Ein weiterer Vorteil des induktiven Sensors besteht darin, dass dieser vollständig gekapselt ist und keine beweglichen mechanischen Teile aufweist, daher leicht zu reinigen und resistent gegen Anhaftung von Verschmutzung ist, und somit die im Bereich der Verarbeitung von Lebensmitteln vorgegebenen hohe hygienischen Anforderungen ideal erfüllt.

Gemäß einer weiteren bevorzugten Ausbildung umfasst die erfindungsgemäße Vorrichtung eine der Messeinrichtung in der Förderrichtung nachgeordnete steuerbar eingerichtete Ausschleuseeinrichtung, die ausgebildet ist, mittels der Steuereinrichtung im Fall des Detektierens des Vorhandenseins von Brustfilet an dem jeweiligen Geflügelkörper zum Ausschleusen dieses Geflügelkörpers angesteuert zu werden und den jeweiligen Geflügelkörper auszuschleusen. Mittels der Ausschleuseeinrichtung werden diejenigen Geflügelkörper, die nicht vollständig filetiert worden sind, vollautomatisch ausgeschleust. Diese Geflügelkörper können beispielsweise gesammelt und im Anschluss einer manuellen Nachbearbeitung zugeführt werden. Auf diese Weise wird garantiert, dass Geflügelkörper, von denen das Brustfilet vollständig entfernt worden ist, von denjenigen Geflügelkörpern eindeutig getrennt werden, die nur unvollständig vom Brustfilet befreit worden sind.

Eine bevorzugte Weiterbildung der Erfindung zeichnet sich dadurch aus, dass die Steuereinrichtung ausgebildet ist, das Vorhandensein des Brustfilets an einem der Geflügelkörper durch eine Winkelstellung des Tastelements zu detektieren, die größer als eine vorgegebene Referenzwinkelstellung ist. So wird auf besonders einfache Weise das Vorhandensein oder das Fehlen des Brustfilets an einem der Geflügelkörper bestimmt. Je nachdem, ob das Brustfilet noch an dem Geflügelköper vorhanden oder bereits vollständig entfernt worden ist, wird das Tastelement unterschiedlich weit ausgelenkt. Befindet sich das Brustfilet noch an dem Geflügelkörper, wird das Tastelement weiter gegen die Federvorspannung ausgelenkt als wenn ein Geflügelköper mit bereits entferntem Brustfilet das Tastelement passiert. Die vorgegebene Referenzwinkelstellung wird also so gewählt, dass diese einer Winkelstellung zwischen den genannten verschiedenen Auslegungen des Tastelements entspricht. In welcher Form die Auswertung mittels der Steuereinrichtung erfolgt, ist von der Wahl des Typs des Sensorelements abhängig. Kommt als Sensorelement ein elektronischer Tast-Kontakt zum Einsatz, so wird die vorgegebene Referenzwinkelstellung durch die Geometrie des Tastelements und die Position des Sensorelements relativ zu dem Tastelement bestimmt. Kommt als Sensorelement ein Drehwinkelgeber zum Einsatz, so wird vorzugsweise das von dem Sensorelement erzeugte Winkelstellungssignal in der Steuereinrichtung verarbeitet und mit einem in der Steuereinrichtung gespeicherten Referenzwinkelstellung verglichen. Ist das Sensorelement als induktiver Sensor ausgebildet, bestimmt vorzugsweise die Einbauposition des Sensorelements die vorgegebene Referenzwinkelstellung. Allen Ausführungsvarianten ist gemein, dass für die Auswertung, ob an dem Geflügelkörper das Brustfilet noch vorhanden ist oder nicht, mittels der Steuereinrichtung keine komplexen Algorithmen ausgeführt werden müssen. Die zur Auswertung erforderlichen Komponenten der Steuereinrichtung sind daher kostengünstig und bieten trotzdem eine extrem hohe Zuverlässigkeit in der Erkennung.

Des Weiteren wird die Aufgabe durch das entsprechende eingangs genannte Verfahren zur automatischen Brustfiletgewinnung von Geflügelkörpern oder Teilen davon mit den Merkmalen des Anspruchs 8 gelöst. Die mit dem erfindungsgemäßen Verfahren einhergehenden Vorteile sind bereits im Zusammenhang mit der erfindungsgemäßen Vorrichtung detailliert erläutert worden. Zur Vermeidung von Wiederholung wird daher auf die zuvor gemachten Ausführungen im Zusammenhang mit der erfindungsgemäßen Vorrichtung verwiesen. Gleiches gilt für die nachstehend genannten weiteren Ausführungsformen des erfindungsgemäßen Verfahrens.

Eine weitere bevorzugte Ausgestaltung der Erfindung ist gekennzeichnet durch Auslenken des Tastelements beim Vorbeifördern der Geflügelkörper gegen Federvorspannung um eine Schwenkachse.

Gemäß einer weiteren bevorzugten Ausführungsform wird die mindestens eine Winkelstellung mittels des Sensorelements induktiv erfasst.

Eine weitere bevorzugte Ausbildung der Erfindung umfasst das Ausschleusen eines der Geflügelkörper mittels einer Ausschleuseeinrichtung durch Ansteuern der Ausschleuseeinrichtung mittels der Steuereinrichtung im Fall des Detektierens des Vorhandenseins von Brustfilet an dem jeweiligen Geflügelkörper mittels der Messeinrichtung.

Eine weitere zweckmäßige Ausgestaltung der Erfindung ist gekennzeichnet durch Detektieren des Vorhandenseins von Brustfilet an einem der Geflügelkörper durch Erfassen der Winkelstellung des Tastelements, die größer als eine vorgegebene Referenzwinkelstellung ist.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine perspektivische Ansicht der erfindungsgemäßen Vorrichtung,
- Fig. 2: eine vergrößerte Teilansicht der in Fig. 1 gezeigten Vorrichtung,
- Fig. 3: eine Detaildarstellung des mechanischen Abtastens des Geflügelkörpers mittels der Messeinrichtung,
- Fig. 4: eine rückwärtige Ansicht der in Figur 1 gezeigten Vorrichtung mit einem Klappenelement in einer ersten Stellung,
- Fig. 5: die in Figur 1 gezeigte Ansicht mit dem Klappenelement in einer zweiten Stellung,
- Fig. 6: eine Ansicht der erfindungsgemäßen Vorrichtung mit Ausschleuseeinrichtung,
- Fig. 7: eine vergrößerte Ansicht der erfindungsgemäßen Messeinrichtung mit Blick in Förderrichtung und
- Fig. 8: eine vergrößerte Ansicht der erfindungsgemäßen Messeinrichtung mit Blick entgegen der Förderrichtung.

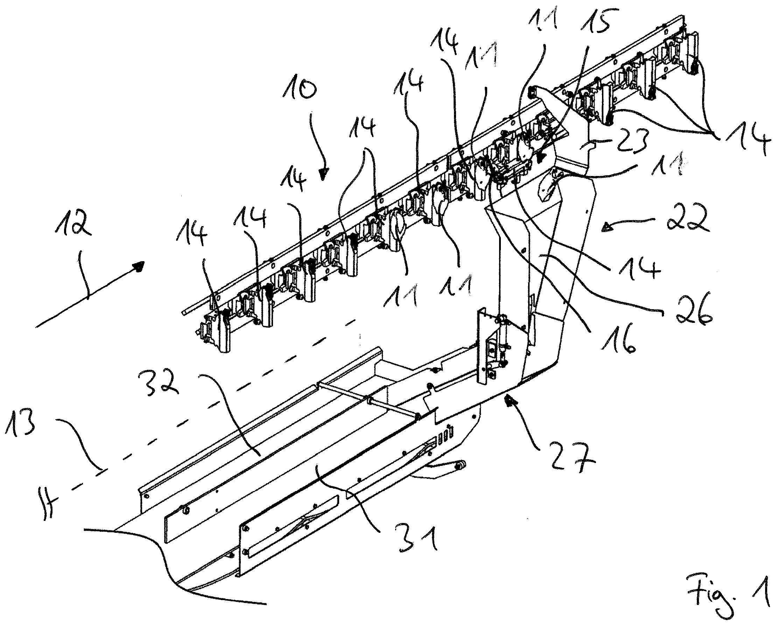

Fig. 1 zeigt eine perspektivische Ansicht der erfindungsgemäßen Vorrichtung. Die Vorrichtung umfasst eine Fördereinrichtung 10, die zum kontinuierlichen Fördern der Geflügelkörper 11 in Förderrichtung 12 ausgebildet und eingerichtet ist. Die Fördereinrichtung 10 weist zum Halten und Fördern der Geflügelkörper 11 entlang einer Bearbeitungsstrecke 13 eingerichtete Aufnahmeelemente 14 auf. Die Aufnahmeelemente 14 sind vorzugsweise als Sattelaufnahmen ausgebildet, mittels derer die Geflügelkörper 11 zuverlässig gehalten werden. An der Bearbeitungsstrecke 13 sind - in der Zeichnung nicht gezeigte - Bearbeitungsstationen angeordnet, mittels derer die Geflügelkörper 11 sequenziell bearbeitet werden.

Derartige Bearbeitungsstationen können beispielsweise eine Beschickungsstation zum Aufsatteln der Geflügelkörper auf die Aufnahmeelemente 14, Enthäutewerkzeuge zum Enthäuten der Geflügelkörper sowie jedenfalls eine Gabelbeinentfernungsstation und eine Brustfiletablösestation aufweisen. Mittels der Gabelbeinentfernungsstation wird das Gabelbein des Geflügelkörpers 11, vorzugsweise durch Stanzwerkzeuge aus dem Geflügelkörper 11 entfernt. Mittels der Brustfiletablösestation erfolgt ein Ablösen der Brustfilets sowie ein vollständiges Lösen der Filets von dem Geflügelkörper 11, beispielsweise an einer Ablösestation.

Die erfindungsgemäße Vorrichtung umfasst weiter mindestens eine Messeinrichtung 15. Die Messeinrichtung 15 ist der Brustfiletablösestation in die Förderrichtung 12 blickend nachgeordnet an der Bearbeitungsstrecke 13 angeordnet. Die mittels der Aufnahmeelemente 14 gehaltenen Geflügelkörper 11 werden so an der Messeinrichtung 15 vorbeigefördert.

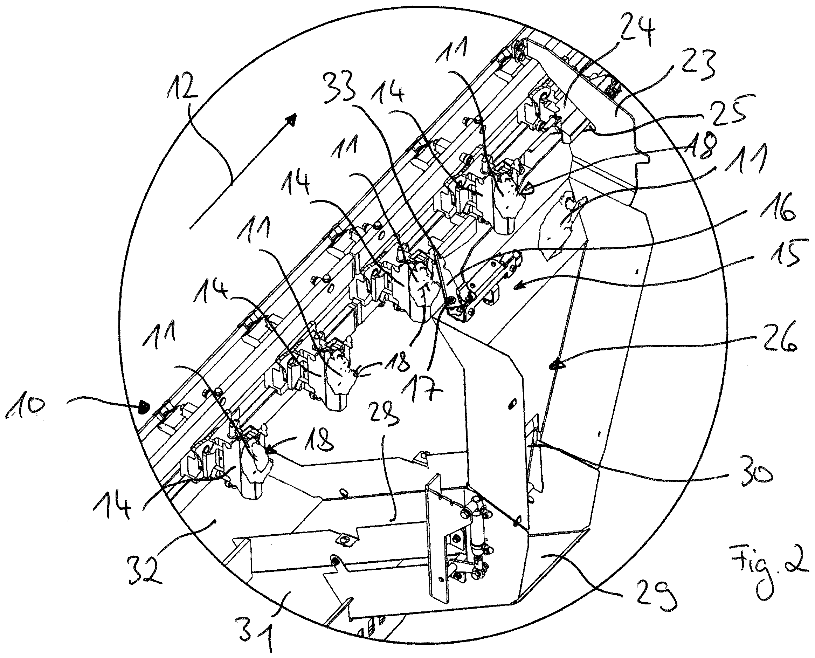

Fig. 2 zeigt eine vergrößerte Teilansicht der in Fig. 1 gezeigten Vorrichtung. Wie in Fig. 2 zu erkennen ist, ist die Fördereinrichtung 10 derart ausgebildet, dass jeweils das Brustbein der Geflügelkörper 11 quer oder im Wesentlichen quer zu der Förderrichtung 12 ausgerichtet ist und die Geflügelkörper 11 brustseitig zu der Messeinrichtung 15 weisen. Die Messeinrichtung 15 weist ein Tastelement 16 auf. Das Tastelement 16 ist zum brustseitigen mechanischen Abtasten der Geflügelkörper 11 ausgebildet und eingerichtet. Anders ausgedrückt gelang das Tastelement 16 während des Förderns der Geflügelkörper 11 mit deren Brustseite in mechanischen Kontakt und tastet auf diese Weise die Geflügelkörper 11 brustseitig ab.

Vorzugsweise ist das Tastelement 15 unter Federvorspannung um eine Schwenkachse 17 schwenkbar gelagert angeordnet. Mittels der Federvorspannung liegt das Tastelement 16 an der Brustseite 18 des Geflügelkörpers 11 an und wird in Abhängigkeit der Geometrie des Geflügelkörpers entsprechend ausgelenkt und auf diese Weise die Brustseite 18 des Geflügelkörpers abgetastet. Weiter bevorzugt ist ein freies Schwenkarmende 33 des Tastelements 16 ausgehend von der Schwenkachse 17 in die Förderrichtung 12 zeigend ausgerichtet.

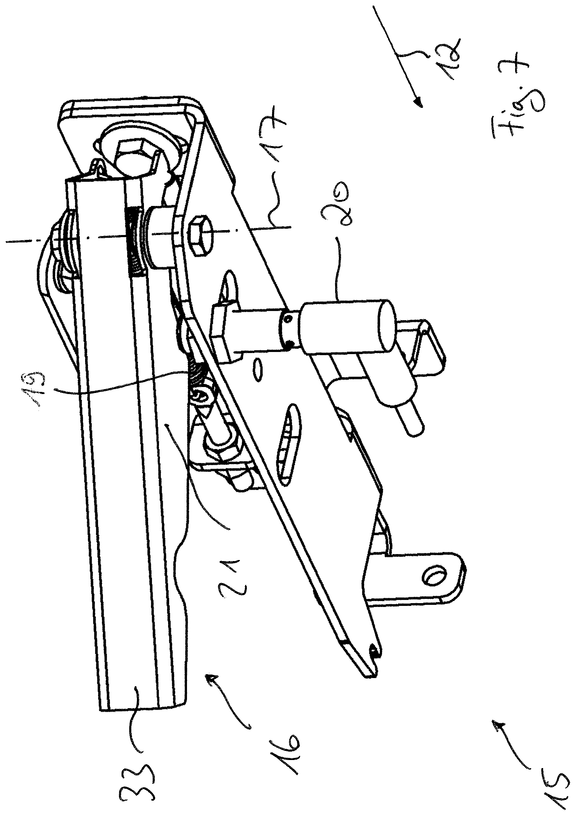

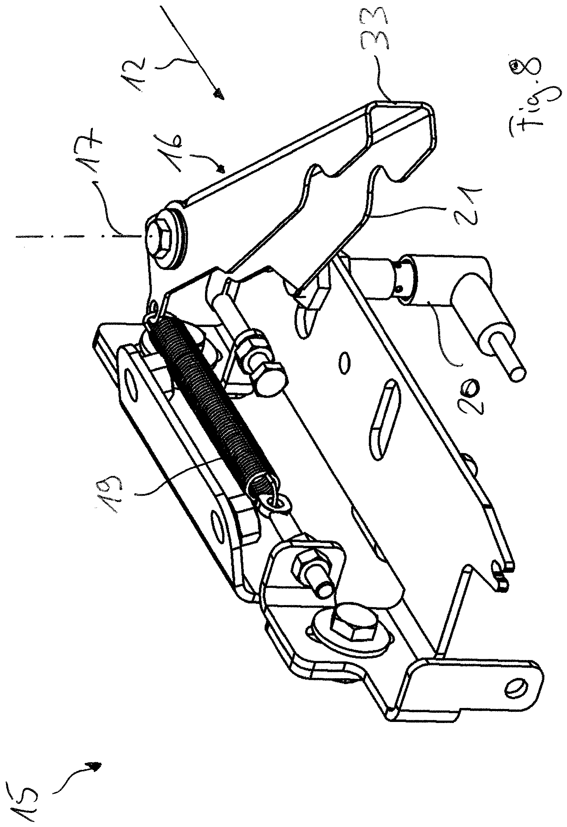

Die Fig. 7 und 8 zeigen jeweils vergrößerte Ansichten der erfindungsgemäßen Messeinrichtung 15, einmal mit Blick in Förderrichtung 12 sowie einmal entgegen der Förderrichtung 12. Zur Federvorspannung des Tastelements 16 ist dieses vorzugsweise als zweiarmiger Hebel ausgebildet, an dessen einem Hebelarm ein Federelement 19 in Form einer Spiralfeder angeordnet ist.

Wie in Fig. 7 gezeigt, befindet sich das Tastelement 16 in einer Warteposition, in der das Tastelement 16 sich nicht in mechanischem Kontakt mit einem Geflügelkörper 11 befindet, in einer Stellung in der das Tastelement 16 ausgehend von der Schwenkachse 17 gegenüber der Bearbeitungsstrecke 13 schräg ausgerichtet ist. Kommt einer der Geflügelkörper 11 beim Vorbeifördern mit dem Tastelement 16 in mechanischen Kontakt, so verdrängt der Geflügelkörper 11 das Tastelement 16 durch Schwenkbewegung um die Schwenkachse 17 von der Bearbeitungsstrecke 13 weg.

Weiter umfasst die Messeinrichtung 15 wenigstens ein Sensorelement 20. Das Sensorelement 20 ist zum Erfassen wenigstens einer Winkelstellung beim Auslenken des Tastelements 16 ausgebildet und eingerichtet. Vorzugsweise ist das Sensorelement 20, wie in Fig. 7 und 8 gezeigt, als induktiver Sensor ausgebildet, mittels dessen die Position der Seitenfläche 21 des Tastelements 16 detektiert wird. Insbesondere ist das Sensorelement 20 derart angeordnet, dass dieses zwischen mindestens zwei Auslenkpositionen des Tastelements 16 differenzieren kann. Wird ein Geflügelkörper 11 mittels des Tastelements 16 abgetastet, hängt die Auslenkungsweite des Tastelements 16 davon ab, ob sich das Brustfilet noch am Geflügelkörper 11 befindet oder ob dieser bereits brustfiletfrei ist.

Ist das Brustfilet noch im Geflügelkörper 11 vorhanden, wird das Tastelement weiter von der Bearbeitungsstrecke 13 weggeschwenkt als dies der Fall ist, wenn der Geflügelkörper 11 bereits vom Brustfilet befreit ist. Vorzugsweise ist das Sensorelement 20 daher eingerichtet, die Winkelstellung, die das Tastelement 16 beim Abtasten eines der Geflügelkörper 11 einnimmt, an dem sich noch das Brustfilet befindet, zu detektieren. Mit anderen Worten ist das Sensorelement 20 ausgebildet, beim Passieren eines der Geflügelkörper 11, an dem sich noch das Brustfilet befindet, die zugehörige Winkelstellung des Tastelements 16 zu erfassen. Passiert einer der Geflügelkörper, der bereits vom Brustfilet befreit ist, das Tastelement 16, so ist die Auslenkung des Tastelements so gering, dass diese Winkelstellung von dem Sensorelement 20 nicht erfasst wird.

Das Sensorelement 20 zeichnet sich insbesondere dadurch aus, dass dieses die Winkelstellung des Tastelements 16 berührungslos erfasst. Alternativ ist es möglich, dass das Sensorelement als Winkeldrehgeber ausgebildet ist, um verschiedene Winkelstellungen des Tastelements 16 zu erfassen.

Vorliegende Erfindung umfasst eine - in der Zeichnung nicht gezeigte - Steuereinrichtung, die ausgebildet ist, zu detektieren, ob der Geflügelkörper 11 vom Brustfilet befreit ist oder nicht. Die Bestimmung der beiden Zustände erfolgt auf Basis der zuvor genannten mindestens einen Winkelstellung des Tastelements 16.

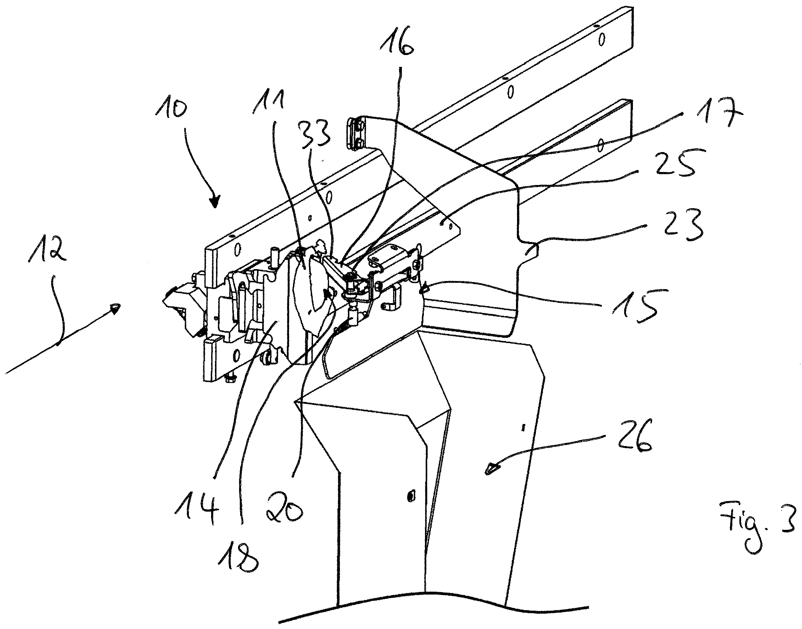

Die erfindungsgemäße Vorrichtung umfasst weiter eine in den Fig 1 bis 3 gezeigte Ausschleuseeinrichtung 22. Die Ausschleuseeinrichtung 22 weist ein Abstreifelement 23 auf. Mittels des Abstreifelements 23 werden die Geflügelkörper 11 von den Aufnahmeelementen 14 gelöst. Hierzu ist die Fördereinrichtung 10 derart eingerichtet, dass die Orientierung jedes Aufnahmeelements 14, auf dem sich einer der Geflügelkörper 11 befindet, vor dem Passieren des Abstreifelements 23 geändert wird.

Wie in Fig. 1 gezeigt, sind die Aufnahmeelemente 14 so ausgerichtet, dass die Geflügelkörper 11 bezüglich ihres Brustbeins senkrecht zu der Förderrichtung 12 ausgerichtet sind. Fig. 1 zeigt, wie die Orientierung eines der Aufnahmeelemente kurz vor dem Passieren des Abstreifelements 23 mittels der Fördereinrichtung 10 verändert wird, so dass dieses eine Aufnahmeelement 24 mit dem Brustbein parallel zu der Förderrichtung 12 ausgerichtet ist.

Das Abstreifelement 23 umfasst eine Durchführungsausnehmung 25, deren Geometrie so gewählt ist, dass zwar das längs ausgerichtete Aufnahmeelement 24 durch diese Durchführungsausnehmung 25 das Abstreifelement 23 passieren kann, der Geflügelkörper 11 wird jedoch von dem Abstreifelement 23 zurückgehalten. Hierdurch löst sich der Geflügelkörper 11 von dem Aufnahmeelement 14 und fällt der Schwerkraft folgend in den Abwurfschacht 26.

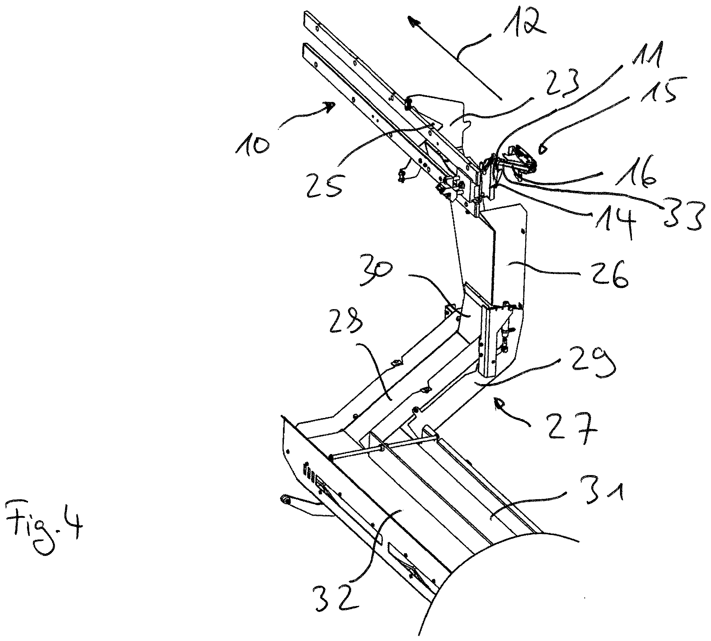

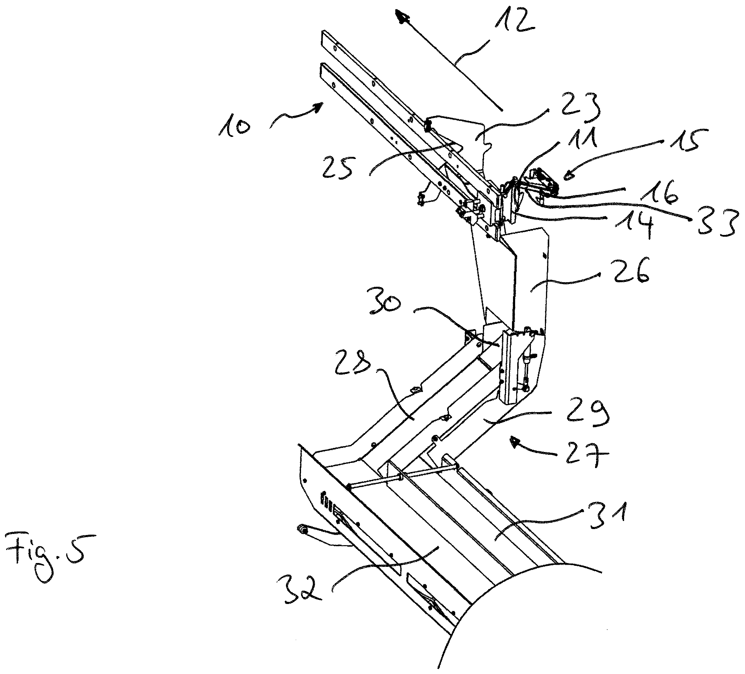

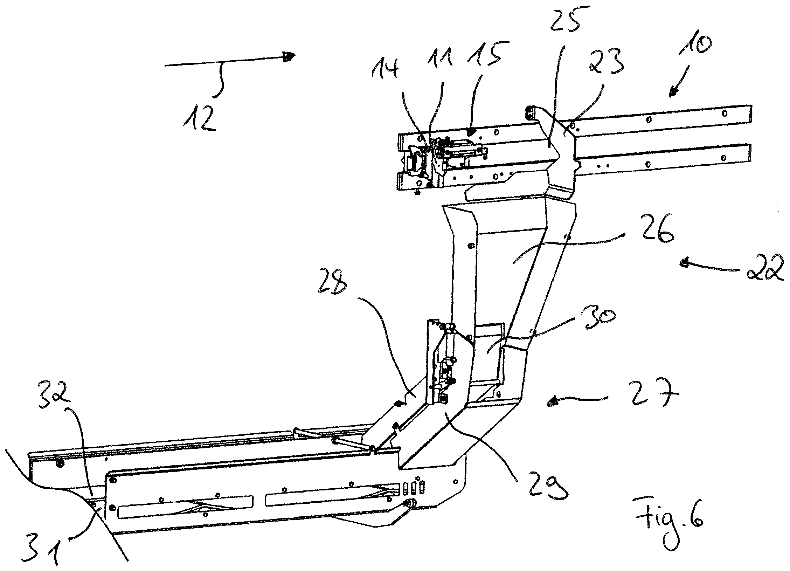

Die weitere Funktion der Ausschleuseeinrichtung 22 wird im Folgenden anhand der Fig. 4, 5 und 6 näher erläutert. Fig. 6 zeigt, wie der Abwurfschacht 26 in eine Doppelrutschenanordnung 27 übergeht. Diese Doppelrutschenanordnung 27 umfasst eine obere Rutsche 28 sowie eine untere Rutsche 29, die übereinander angeordnet sind. Im Übergang zwischen dem Abwurfschacht 26 und der Doppelrutschenanordnung 27 befindet sich eine schwenkbare Leitklappe 30, die zwischen den in Fig. 4 und 5 gezeigten Leitklappenstellungen mittels der Steuereinrichtung steuerbeweglich ausgebildet ist.

Befindet sich die Leitklappe 30 in der in Fig. 4 gezeigten ersten Leitklappenstellung, so ist die obere Rutsche 28 gesperrt und die Geflügelkörper 11 werden an die untere Rutsche 29 geleitet. Im umgekehrten Fall, der in Fig. 5 gezeigt ist, befindet sich die Leitklappe 30 in einer zweiten Leitklappenstellung, bei der die untere Rutsche 29 gesperrt ist und die Geflügelkörper 11 über die Leitklappe 30 an die obere Rutsche 28 geleitet werden. Die obere Rutsche 28 und die untere Rutsche 29 münden in zwei parallel zueinander angeordneten Förderbändern 31, 32, mittels derer die Geflügelkörper 11 zu in der Zeichnung nicht gezeigten weiteren Stationen gefördert werden.

Die Steuereinrichtung ist ausgebildet, in Abhängigkeit des Detektierens des Vorhandenseins von Brustfilet an dem jeweiligen Geflügelkörper 11 diesen Geflügelkörper 11 entsprechend einer Steuervorgabe durch Umsteuern der Leitklappe 30 über die Doppelrutschenanordnung 27 immer ein und demselben Förderband 31, 32 zuzuführen. Alternativ kann die Ansteuerung der Leitklappe 30 durch die Steuereinrichtung beim Detektieren eines brustfiletfreien Geflügelkörpers 11 erfolgen.

Die vorliegende Erfindung umfasst auch ein Verfahren zur automatischen Brustfiletgewinnung von Geflügelkörpern 11 oder Teilen davon. Die Schritte des erfindungsgemäßen Verfahrens ergeben sich aus der zuvor erläuterten erfindungsgemäßen Vorrichtung in analoger Weise. Zur Vermeidung von Wiederholung wird daher im Folgenden nur auf ausgewählte Aspekte des erfindungsgemäßen Verfahrens eingegangen.

Das Verfahren umfasst die Schritte: kontinuierliches Fördern der Geflügelkörper 11 in eine Förderrichtung 12 mittels der Fördereinrichtung 10; Durchführen des Entfernens des Gabelbeines mittels der - in der Zeichnung nicht gezeigten - Gabelbeinentfernungsstation; Durchführen zumindest eines Bearbeitungsschrittes zum teilweisen oder vollständigen Lösen des Brustfilets mittels der - in der Zeichnung nicht gezeigten - Brustfiletablösestation; Vorbeifördern der mittels der Aufnahmeelemente 14 gehaltenen Geflügelkörper 11 an der Messeinrichtung 15. Die Geflügelkörper 11 sind quer oder im Wesentlichen quer zu der Förderrichtung 12 ausgerichtet und zeigen brustseitig zu der Messeinrichtung 15. Schließlich erfolgt ein mechanisches Abtasten der Geflügelkörper 11 mittels des Tastelements 16 der Messeinrichtung 15.

Vorzugsweise wird das Tastelement 16 beim Vorbeifördern der Geflügelkörper 11 gegen Federvorspannung des Tastelements 16 um die Schwenkachse 17 ausgelenkt.

## Patentansprüche

1. Vorrichtung zur automatischen Brustfiletgewinnung von Geflügelkörpern (11) oder Teilen davon, umfassend
eine zum kontinuierlichen Fördern der Geflügelkörper (11) in eine Förderrichtung (12) ausgebildete Fördereinrichtung (10), wobei
die Fördereinrichtung (10) zum Halten und Fördern der Geflügelkörper (11) entlang einer Bearbeitungsstrecke (13) eingerichtete Aufnahmeelemente (14) aufweist, wobei an der Bearbeitungsstrecke (13) Bearbeitungsstationen angeordnet sind und die Bearbeitungsstationen mindestens eine Gabelbeinentfernungsstation sowie eine Brustfiletablösestation aufweisen,
mindestens eine der Brustfiletablösestation in der Förderrichtung (12) nachgeordnete und an der Bearbeitungsstrecke (13) angeordnete Messeinrichtung (15), an der die mittels der Aufnahmeelemente (14) gehaltenen Geflügelkörper (11) derart vorbeigefördert werden, dass jeweils das Brustbein der Geflügelkörper (11) zumindest im Wesentlichen quer zu der Förderrichtung (12) brustseitig zu der Messeinrichtung (15) weisend ausgerichtet ist, wobei
die Messeinrichtung (15) ein Tastelement (16) aufweist, das zum brustseitigen mechanischen Abtasten des Geflügelkörpers (11) ausgebildet und eingerichtet ist, wobei
die Messeinrichtung (15) mindestens ein Sensorelement (20) umfasst, das zur Erfassung mindestens einer Winkelstellung beim Auslenken des Tastelements (16) ausgebildet und eingerichtet ist, weiter umfassend
eine Steuereinrichtung, die ausgebildet ist, auf Basis der mindestens einen Winkelstellung zu detektieren, ob der Geflügelkörper (11) vom Brustfilet befreit ist oder ob das Brustfilet am Geflügelkörper (11) noch vorhanden ist.

2. Vorrichtung nach Anspruch 1, **dadurch gekennzeichnet, dass** das Tastelement (16) unter Federvorspannung um eine Schwenkachse (17) schwenkbar gelagert angeordnet ist.

3. Vorrichtung nach Anspruch 2, **dadurch gekennzeichnet, dass** ein freies Schwenkarmende (33) des Tastelements (16) ausgehend von der Schwenkachse (17) in die Förderrichtung (12) zeigend ausgerichtet ist.

4. Vorrichtung nach einem der Ansprüche 1 bis 3, **dadurch gekennzeichnet, dass** das Tastelement (16) in einer Warteposition, in der es sich nicht in mechanischem Kontakt mit einem der Geflügelkörper (11) befindet, ausgehend von der Schwenkachse (17) zur Bearbeitungsstrecke (13) weisend gegenüber der Bearbeitungsstrecke (13) in Schrägstellung angeordnet ist.

5. Vorrichtung nach Anspruch einem der Ansprüche 1 bis 4, **dadurch gekennzeichnet, dass** das Sensorelement (20) als induktiver Sensor ausgebildet ist.

6. Vorrichtung nach einem der Ansprüche1 bis 5 weiter umfassend eine der Messeinrichtung (15) in der Förderrichtung (12) nachgeordnete steuerbar eingerichtete Ausschleuseeinrichtung (22), die ausgebildet ist, mittels der Steuereinrichtung im Fall des Detektierens des Vorhandenseins von Brustfilet an dem jeweiligen Geflügelkörper (11) zum Ausschleusen dieses Geflügelkörpers (11) angesteuert zu werden und den jeweiligen Geflügelkörper (11) auszuschleusen.

7. Vorrichtung nach einem der Ansprüche 1 bis 6, **dadurch gekennzeichnet, dass** die Steuereinrichtung ausgebildet ist, das Vorhandensein des Brustfilets an einem der Geflügelkörper (11) durch eine Winkelstellung des Tastelements (16) zu detektieren, die größer als eine vorgegebene Referenzwinkelstellung ist.

8. Verfahren zur automatischen Brustfiletgewinnung von Geflügelkörpern (11) oder Teilen davon, umfassend die Schritte:
- kontinuierliches Fördern der Geflügelkörper (11) in eine Förderrichtung (12) mittels einer Fördereinrichtung (10), wobei die Fördereinrichtung (10) zum Halten und Fördern der Geflügelkörper (11) entlang einer Bearbeitungsstrecke (13) eingerichtete Aufnahmeelemente (14) aufweist, und wobei an der Bearbeitungsstrecke (13) Bearbeitungsstationen angeordnet sind, die mindestens eine Gabelbeinentfernungsstation sowie eine Brustfiletablösestation aufweisen,
- Durchführen des Entfernens des Gabelbeines mittels der Gabelbeinentfernungsstation,
- Durchführen zumindest eines Bearbeitungsschrittes zum teilweisen oder vollständigen Lösen des Brustfilets mittels der Brustfiletablösestation,
- Vorbeifördern der mittels der Aufnahmeelemente (14) gehaltenen Geflügelkörper (11) an mindestens einer der Brustfiletablösestation an der Bearbeitungstrecke (13) in der Förderrichtung (12) nachgeordneten Messeinrichtung (15) derart, dass jeweils das Brustbein der Geflügelkörper (11) zumindest im Wesentlichen quer zu der Förderrichtung (12) brustseitig zu der Messeinrichtung (15) weisend ausgerichtet ist, und
- mechanisches Abtasten der Geflügelkörper (11) mittels eines Tastelements (16) der Messeinrichtung (15),
- Erfassen mindestens einer Winkelstellung beim Auslenken des Tastelements (16) mittels mindestens eines Sensorelements (20) der Messeinrichtung (15),
- Detektieren mittels einer Steuereinrichtung, ob der Geflügelkörper (11) vom Brustfilet befreit ist oder ob das Brustfilet am Geflügelkörper (11) noch vorhanden ist, auf Basis der mindestens einen Winkelstellung.

9. Verfahren nach Anspruch 8, **gekennzeichnet durch** Auslenken des Tastelements (16) beim Vorbeifördern der Geflügelkörper (11) gegen Federvorspannung um eine Schwenkachse (17).

10. Verfahren nach einem der Ansprüche 8 oder 9, **dadurch gekennzeichnet, dass** die mindestens eine Winkelstellung mittels des Sensorelements (20) induktiv erfasst wird.

11. Verfahren nach einem der Ansprüche 8 bis 10 weiter umfassend Ausschleusen eines der Geflügelkörper mittels einer Ausschleuseeinrichtung (22) durch Ansteuern der Ausschleuseeinrichtung (22) mittels der Steuereinrichtung im Fall des Detektierens des Vorhandenseins von Brustfilet an dem jeweiligen Geflügelkörper (11) mittels der Messeinrichtung (15).

12. Verfahren nach einem der Anspruch 8 bis 11, **gekennzeichnet durch** Detektieren des Vorhandenseins von Brustfilet an einem der Geflügelkörper (11) durch Erfassen der Winkelstellung des Tastelements (16), die größer als eine vorgegebene Referenzwinkelstellung ist.

## Claims

1. Apparatus for automatically recovering breast fillets from poultry bodies (11) or parts thereof, comprising
a conveying device (10) designed configured to continuously convey the poultry bodies (11) in a conveying direction (12), wherein
the conveying device (10) has receiving elements (14) adapted to hold and convey the poultry bodies (11) along a processing path (13), processing stations being arranged on the processing path (13) and the processing stations including at least a furcula-removal station and a breast fillet detaching station,
at least one measuring device (15) arranged downstream of the breast fillet detaching station in the conveying direction (12) and arranged on the processing path (13) the poultry bodies (11) held by means of the receiving elements (14) being conveyed past the measuring device such that in each case the sternum of the poultry bodies (11) is oriented at least substantially transversely to the conveying direction (12) on the breast side facing the measuring device (15), wherein
the measuring device (15) has a scanning element (16) which is configured and adapted to mechanically scan the poultry body (11) on the breast side, wherein
the measuring device (15) comprises at least one sensor element (20) which is configured and adapted to detect at least one angular position on deflection of the scanning element (16), further comprising
a control device which is configured to detect, on the basis of the at least one angular position, whether the poultry body (11) has been freed of the breast fillet or whether the breast fillet is still present on the poultry body (11).

2. Apparatus according to claim 1, **characterized in that** the scanning element (16) is arranged so as to be pivotably mounted, with spring biasing, about a pivot axis (17).

3. Apparatus according to claim 2, **characterized in that** a free pivot arm end (33) of the scanning element (16) is oriented so as to point, starting from the pivot axis (17), in the conveying direction (12).

4. Apparatus according to any one of claims 1 to 3, **characterized in that** the scanning element (16), in a waiting position in which it is not in mechanical contact with one of the poultry bodies (11), is arranged, starting from the pivot axis (17), in an oblique position relative to the processing path (13), pointing towards the processing path (13).

5. Apparatus according to any one of claims 1 to 4, **characterized in that** the sensor element (20) is in the form of an inductive sensor.

6. Apparatus according to any one of claims 1 to 5, further comprising a discharge device (22), which is arranged downstream of the measuring device (15) in the conveying direction (12) and is adapted so as to be controllable and which is configured so as to be activated by means of the control device in the case of the detection of the presence of breast fillet on the respective poultry body (11) for the discharge of this poultry body (11) and to discharge the respective poultry body (11).

7. Apparatus according to any one of claims 1 to 6, **characterized in that** the control device is configured to detect the presence of the breast fillet on one of the poultry bodies (11) by an angular position of the scanning element (16) which is greater than a predefined reference angular position.

8. Method for automatically recovering breast fillets from poultry bodies (11) or parts thereof, comprising the steps of:
- continuous conveying of the poultry bodies (11) in a conveying direction (12) by means of a conveying device (10), wherein the conveying device (10) has receiving elements (14) adapted to hold and convey the poultry bodies (11) along a processing path (13), and wherein processing stations are arranged on the processing path (13), which processing stations include at least one furcula-removal station and a breast fillet detaching station,
- carrying out the removal of the forcula by means of the forcula-removal station,
- carrying out at least one processing step for the partial or complete detachment of the breast fillet by means of the breast fillet detaching station,
- conveying the poultry bodies (11) held by means of the holding elements (14) past at least one measuring device (15) arranged on the processing path (13) downstream of the breast fillet detaching station in the conveying direction (12) such that in each case the sternum of the poultry bodies (11) is oriented at least substantially transversely to the conveying direction (12) with the breast side facing the measuring device (15), and
- mechanical scanning the poultry bodies (11) by means of a scanning element (16) of the measuring device (15),
- detecting at least one angular position when the scanning element (16) is deflected by means of at least one sensor element (20) of the measuring device (15),
- detecting by means of a control device whether the poultry body (11) has been freed of the breast fillet or whether the breast fillet is still present on the poultry body (11), on the basis of the at least one angular position.

9. Method according to claim 8, **characterized by** deflection of the scanning element (16), against spring biasing, about a pivot axis (17) as the poultry bodies (11) are conveyed past.

10. Method according to one of claims 8 or 9, **characterized in that** the at least one angular position is detected inductively by means of the sensor element (20).

11. Method according to any one of claims 8 to 10, further comprising discharging one of the poultry bodies by means of a discharge device (22) by controlling the discharge device (22) by means of the control device in the case of detection by means of the measuring device (15) of the presence of breast fillet on the respective poultry body (11).

12. Method according to any one of claims 8 to 11, **characterized by** detecting the presence of breast fillet on one of the poultry bodies (11) by detection of the angular position of the scanning element (16) which is greater than a predetermined reference angular position.

## Revendications

1. Dispositif pour l'extraction automatique de filets de poitrine de corps de volaille (11) ou de parties de ceux-ci, comprenant
un appareil de transport (10) configuré pour le transport continu des corps de volaille (11) dans une direction de transport (12),
l'appareil de transport (10) présentant des éléments de réception (14) adaptés pour maintenir et transporter les corps de volaille (11) le long d'un trajet de traitement (13), des postes de traitement étant agencés sur le trajet de traitement (13) et les postes de traitement présentant au moins un poste d'enlèvement de fourchette ainsi qu'un poste de détachement de filet de poitrine,
au moins un appareil de mesure (15) agencé en aval du poste de détachement de filet de poitrine dans la direction de transport (12) et agencé sur le trajet de traitement (13), devant lequel les corps de volaille (11) maintenus au moyen des éléments de réception (14) sont transportés de telle sorte que le sternum des corps de volaille (11) est orienté au moins essentiellement transversalement à la direction de transport (12) du côté de la poitrine vers l'appareil de mesure (15),
l'appareil de mesure (15) présentant un élément palpeur (16) qui est configuré et adapté pour palper mécaniquement le corps de volaille (11) du côté de la poitrine,
l'appareil de mesure (15) comprenant au moins un élément capteur (20) qui est configuré et adapté pour identifier au moins une position angulaire lors de la déviation de l'élément palpeur (16), comprenant en outre
un appareil de commande qui est configuré pour détecter, sur la base de l'au moins une position angulaire, si le corps de volaille (11) est débarrassé du filet de poitrine ou si le filet de poitrine est encore présent sur le corps de volaille (11).

2. Dispositif selon la revendication 1, **caractérisé en ce que** l'élément palpeur (16) est agencé de manière à pouvoir pivoter autour d'un axe de pivotement (17) sous une précontrainte de ressort.

3. Dispositif selon la revendication 2, **caractérisé en ce qu'**une extrémité de bras de pivotement libre (33) de l'élément palpeur (16) est orientée dans la direction de transport (12) à partir de l'axe de pivotement (17).

4. Dispositif selon l'une quelconque des revendications 1 à 3, **caractérisé en ce que** l'élément palpeur (16), dans une position d'attente dans laquelle il ne se trouve pas en contact mécanique avec l'un des corps de volaille (11), est agencé en position inclinée par rapport au trajet de traitement (13), à partir de l'axe de pivotement (17) vers le trajet de traitement (13).

5. Dispositif selon l'une quelconque des revendications 1 à 4, **caractérisé en ce que** l'élément capteur (20) est configuré sous forme de capteur inductif.

6. Dispositif selon l'une quelconque des revendications 1 à 5, comprenant en outre un appareil d'éjection (22) adapté de manière commandable agencé en aval de l'appareil de mesure (15) dans la direction de transport (12), qui est configuré pour être commandé au moyen de l'appareil de commande dans le cas de la détection de la présence de filet de poitrine sur le corps de volaille (11) respectif pour éjecter ce corps de volaille (11) et pour éjecter le corps de volaille (11) respectif.

7. Dispositif selon l'une quelconque des revendications 1 à 6, **caractérisé en ce que** l'appareil de commande est configuré pour détecter la présence du filet de poitrine sur l'un des corps de volaille (11) par une position angulaire de l'élément palpeur (16) qui est supérieure à une position angulaire de référence prédéterminée.

8. Procédé d'extraction automatique de filets de poitrine de corps de volaille (11) ou de parties de ceux-ci, comprenant les étapes suivantes :
- le transport continu des corps de volaille (11) dans une direction de transport (12) au moyen d'un appareil de transport (10), l'appareil de transport (10) présentant des éléments de réception (14) adaptés pour maintenir et transporter les corps de volaille (11) le long d'un trajet de traitement (13), et des postes de traitement étant agencés sur le trajet de traitement (13), lesquels présentent au moins un poste d'enlèvement de fourchette ainsi qu'un poste de détachement de filet de poitrine,
- la réalisation de l'enlèvement de la fourchette au moyen du poste d'enlèvement de fourchette,
- la réalisation d'au moins une étape de traitement pour détacher partiellement ou complètement le filet de poitrine au moyen du poste de détachement de filet de poitrine,
- le transport des corps de volaille (11) maintenus au moyen des éléments de réception (14) devant au moins un appareil de mesure (15) agencé en aval du poste de détachement de filet de poitrine sur le trajet de traitement (13) dans la direction de transport (12), de telle sorte que le sternum des corps de volaille (11) est orienté au moins essentiellement transversalement à la direction de transport (12) du côté de la poitrine vers l'appareil de mesure (15), et
- le palpage mécanique des corps de volaille (11) au moyen d'un élément palpeur (16) de l'appareil de mesure (15),
- l'identification d'au moins une position angulaire lors de la déviation de l'élément palpeur (16) au moyen d'au moins un élément capteur (20) de l'appareil de mesure (15),
- la détection, au moyen d'un appareil de commande, de si le corps de volaille (11) est débarrassé du filet de poitrine ou de si le filet de poitrine est encore présent sur le corps de volaille (11), sur la base de l'au moins une position angulaire.

9. Procédé selon la revendication 8, **caractérisé par** la déviation de l'élément palpeur (16) autour d'un axe de pivotement (17) lors du transport des corps de volaille (11) contre une précontrainte de ressort.

10. Procédé selon l'une quelconque des revendications 8 ou 9, **caractérisé en ce que** l'au moins une position angulaire est identifiée par induction au moyen de l'élément capteur (20).

11. Procédé selon l'une quelconque des revendications 8 à 10, comprenant en outre l'éjection d'un des corps de volaille au moyen d'un appareil d'éjection (22) en commandant l'appareil d'éjection (22) au moyen de l'appareil de commande dans le cas de la détection de la présence de filet de poitrine sur le corps de volaille (11) respectif au moyen de l'appareil de mesure (15).

12. Procédé selon l'une quelconque des revendications 8 à 11, **caractérisé par** la détection de la présence de filet de poitrine sur l'un des corps de volaille (11) en identifiant la position angulaire de l'élément palpeur (16), qui est supérieure à une position angulaire de référence prédéterminée.
